# EUROPEAN PATENT APPLICATION

(11) **EP 4 268 588 A1**
(43) Date of publication of application: **01.11.2023**
(21) Application number: 23170132.7
(22) Date of filing: 26.04.2023
(51) Int. Cl.: A01K 1/03, G08B 25/00

(54) **SYSTEM AND METHOD FOR REMOTE MONITORING AND CONTROL OF VIVARIUM DEVICES**

(30) Priority: 27.04.2022 US 202263335389 P; 24.04.2023 US 202318138483
(71) Applicant: Allentown LLC, Allentown, NJ 08501-0968 (US)
(72) Inventor: Coiro, John, Allentown, NJ (US); Miller, Steve, Allentown, NJ (US); Patel, Rupesh, East Windsor, NJ (US)
(74) Representative: Alves Moreira, Pedro

(57) **Abstract**

A system to facilitate the user to remotely monitor and/or control vivarium devices via a computer web browser or mobile phone application. Monitored electronic animal housing devices push and pull data over the internet for storage at a database and access through a web application interface. Statistics and reports can be automatically generated directed to the collected data to aid in maintaining a consistent environment within the cage system.

## Description

### Field of the Invention

The present invention relates to a system for monitoring conditions of an animal cage or rack of animal cages and in particular the present invention is directed to remote control of vivarium devices for remote monitoring and/or controlling of electronic animal housing devices via a computer web browser or mobile phone application.

### Description of the Related Art

Systems for providing air and removing exhaust from racks containing animal cages are known. U.S. Pat. No. 5,307,757 describes a ventilated animal rack and animal cage system including a forced air system in which positive air is supplied by an air inlet manifold. Air is removed from the cage by negative air pressure to an exhaust manifold. The exhausted air is treated with a laboratory air treatment system or portable HEPA filtered exhaust unit and is released to the atmosphere.

U.S. Patent No. 6,308,660 describes an animal caging system including a self-sealing animal cage removably connected to an air supply and an exhaust. The self-sealing animal cage is supported by a rack. The self-sealing animal cage is sealed by an air inlet connection and an air outlet connection to the air supply and the exhaust connection. After the cages are removed from the air supply and the exhaust, the air inlet connection and the exhaust connection seals the cage to prevent air from entering or exiting the cage.

The air supply and exhaust are provided with an air delivery and exhaust apparatus side mounted to the rack. The air delivery and exhaust apparatus is integrated with high efficiency particulate air (HEPA) filters. The air delivery and exhaust apparatus operates in a positive pressure mode for pushing air into the cage or in a negative mode for withdrawing air from the cage. Air from the environment is HEPA filtered and is used as supply air in the air delivery apparatus and exhaust air from the exhaust apparatus is HEPA filtered before being emitted into the environment.

US Patent Publication No. 2007/0256643 describes automatic remote monitoring and control of the environment of ventilated racks of animal cages and corresponding equipment through wireless interfaces. An application poles or fetches data from the equipment. A plurality of status parameters of a ventilated rack of animal cages can be communicated wirelessly through the access point. Control input from the access point is communicated wirelessly to the ventilated rack of animal cages so that the environment of the ventilated racks of animal cages and corresponding equipment is remotely monitored.

It is desirable to provide a global easy to access reliable system to automatically and continuously monitor and control laboratory animal cages and racks to provide a consistent environment within a cage system.

### Summary of the Invention

The present invention relates to a system to facilitate the user to remotely monitor and/or control vivarium devices via a computer web browser or mobile phone application. The vivarium devices include electronic animal housing devices. The electronic animal housing devices being monitored can include for example a HEPA filtered blower or other device which is integrated to a housing system such as an IVC (Individual Ventilated Cage) rack. Example collected data from the monitored electronic animal housing devices can include temperature, humidity, blower speed, and pressure. A centralized alarm or alert can be triggered from the collected data. The electronic animal housing devices can be connected to the internet via ethernet or wireless technology. The collected data can be stored. Statistics and reports can be automatically generated directed to the collected data to aid in maintaining a consistent environment within the cage system.

In one embodiment, electronic animal housing devices can be organized in groups. The electronic animal housing devices push or pull data to a cloud server database over the internet. After data transformation, real time data is loaded to a web application. A web application interface can be accessed over the internet by a user to access the real time data. Users of the web application interface are able to manage data and take necessary actions globally from all over the world. The system can also automatically and continuously monitor and control laboratory animal cages and racks to provide a consistent environment within the cage system. Software updates can be readily made to the web application through the system. Firmware updates for the electronic animal housing devices can be readily made through the system.

The invention will be more clearly described by reference to the following drawing.

### Brief Description of the Drawing

A more complete understanding of the present invention may be obtained from consideration of the following description in conjunction with the drawing in which:

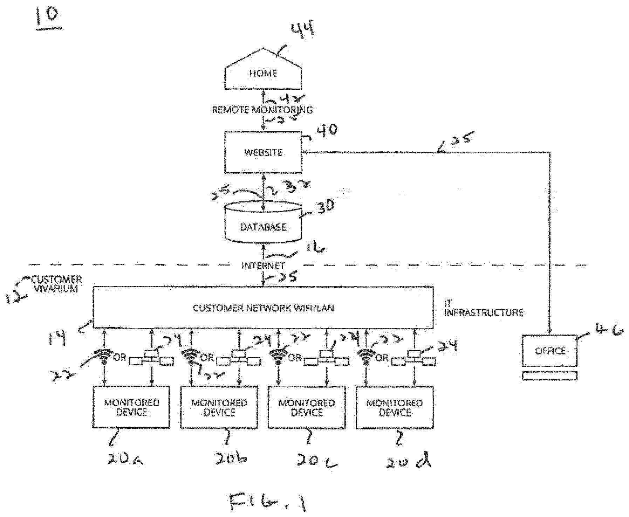

Fig. 1 is a schematic diagram of a system to remotely monitor and control a vivarium.

### Detailed Description

Reference will now be made in greater detail to a preferred embodiment of the invention, an example of which is illustrated in the accompanying drawing. Wherever possible, the same reference numerals will be used throughout the drawing and the description to refer to the same or like parts.

Fig. 1 illustrates a system to remotely monitor and control vivarium devices 10. Vivarium 12 can include a plurality of monitored devices 20a-20d. Example monitored devices 20a-20d include individual animal cages and individual animal cages supported on at least one shelf, platform or suspended runner system on rows of rack. Example animal cage racks are manufactured by Allentown, LLC as Nexgen, Micro-Vent and PNC. Monitored devices 20a-20d can also include a blower/air supply system or other electronically monitored devices. The blower/air supply system can be a HEPA filtered blower.

Monitored devices 20a-20d are connected to network 14. In one embodiment, monitored devices 20a -20d are connected to network 14 with wireless interface 22. Suitable wireless interfaces bidirectional wireless interfaces including but not limited to Bluetooth, IR (infrared radiation) wireless, various RF wireless links, cellular & PCS links, wireless TCP/IP interfaces as well as other systems and protocols that are known to those skilled in the wireless communication art. In one embodiment, monitored devices 20a -20d are connected to network 14 with ethernet interface 24.

Network 14 communicates with internet 16. Data 25 from monitored devices 20a -20d can be stored in database 30. IT infrastructure can include a SQL Server. Data 25 can be real time data. Example data 25 from the monitored electronic animal housing devices can include temperature, humidity, blower speed, pressure, light color or intensity, and air quality. Database 30 can be a cloud based database in which a database service is built and accessed through a cloud platform including a cloud server. Monitored devices 20a-20d can push data 25 over internet 16 to the cloud server or retrieve updates and configuration information.

Website 40 accesses data 25 from database 30. Website 40 can be accessed by a computer web browser or mobile phone application to provide a web application interface 42. In one embodiment, website 40 and web application interface 42 is accessed at home 42. Alternative, website 40 and web application interface 42 is accessed at office 46. A centralized alarm or alert can be triggered at website 40 from collected data 25.

Web application interface 42 can be implemented for example in HTML, java script, MVC or C#. Web application interface 42 can be started by the user manually, or automatically on a networked device. The application with a user interface can be an executable program running on a networked device. The networked device can include components such as a processor, memory, storage, microphone, location acquisition module, and operating system. For example, the networked device can be a laptop, smart phone, AI assistant or tablet. The network can be the internet or a local area network. In another embodiment, the application is embedded into networked devices of an Artificial Intelligence (AI) assistant such as Microsoft Cortana, Apple Siri, Amazon Alexa, Google assistant, and the like. The embodiments can have a visual and/or audible user interface to the application

During use, one or a plurality of monitored devices 20a-20d can be monitored by system to remotely monitor and control vivarium devices 10. Monitored devices 20a-20d can be organized in groups. The groups provide capabilities to monitor a plurality of monitored devices 20a-20d as groups of individual cages or racks. Monitored devices 20a- 20d push or pull data 25 to database 30. After data transformation, data 25 is loaded to database 30. Web application interface 42 can be accessed by a user to access data 25. Statistics and reports can be automatically generated by website 40 using collected data 25 to aid in maintaining a consistent environment within vivarium 12. Users of web application interface 42 are able to manage data and take necessary actions from all over the world. Software updates can be readily made through system 10. Firmware updates for the monitored devices 20a-20d can be readily made through system 10.

Although the present invention is suited for implementation as an independent software systems, the present invention is equally well suited for implementation as a functional/library module, an applet, a plug in software application, as a device plug in, in a microchip implementation; programmable device, etc. The system can be implemented as an embedded device, such as an application specific integrated circuit (ASIC), an integrated circuit chip set, ePROM, ROM, application board, or within a larger integrated circuit.

Embodiments of the present invention can be implemented in connection with a special purpose or general purpose telecommunications device that include both hardware and/or software components, including special purpose or general purpose computers.

When information is transferred or provided over a network or another communications connection (either hardwired, wireless, or a combination of hardwired or wireless) to a computer, hardwired devices for sending and receiving computer-executable instructions, data structures, and/or data signals (e.g., wires, cables, optical fibers, electronic circuitry, chemical, and the like) should properly be viewed as physical computer-readable mediums while wireless carriers or wireless mediums for sending and/or receiving computer-executable instructions, data structures, and/or data signals (e.g., radio communications, satellite communications, infrared communications, and the like) should properly be viewed as intangible computer-readable mediums. Combinations of the above should also be included within the scope of computer-readable media.

Computer-executable instructions include, for example, instructions, data, and/or data signals which cause a general purpose computer, special purpose computer, or special purpose processing device to perform a certain function or group of functions. Although not required, aspects of the invention have been described herein in the general context of computer-executable instructions, such as program modules, being executed by computers, in network environments and/or non-network environments. Generally, program modules include routines, programs, objects, components, and content structures that perform particular tasks or implement particular abstract content types. Computer-executable instructions, associated content structures, and program modules represent examples of program code for executing aspects of the methods disclosed herein.

Embodiments may also include computer program products for use in the systems of the present invention, the computer program product having a physical computer-readable medium having computer readable program code stored thereon, the computer readable program code comprising computer executable instructions that, when executed by a processor, cause the system to perform the methods of the present invention.

Numerous and varied other arrangements can be readily devised in accordance with these principles by those skilled in the art without departing from the spirit and scope of the invention.

## Claims

1. A system to remotely monitor and control vivarium devices comprising:
one or a plurality of monitored devices;
the monitored devices push or pull data to database to form collected data; and
a web application interface accesses the collected data;
wherein accessed collected data is used to aid in monitoring or maintaining a consistent environment within a vivarium.

2. The system of claim 1 wherein the monitored devices are connected to a network with a wireless interface.

3. The system of claim 2 wherein the wireless interface is a bidirectional wireless interface selected from Bluetooth, infrared radiation (IR) wireless, RF wireless links, cellular links, PCS links, and wireless TCP/IP interfaces.

4. The system of claim 1 wherein the monitored devices are connected to a network with an ethernet interface.

5. The system of claim 1 wherein the monitored devices can push or pull data from a network over the internet to the database.

6. The system of claim 1 wherein the data is real time data.

7. The system of claim 1 wherein the data is one or more of temperature, humidity, blower speed, pressure, light color or intensity, and air quality.

8. The system of claim 1 wherein a website accesses the data from the database.

9. The system of claim 8 wherein the web application interface accesses data from the website.

10. The system of claim 9 wherein a centralized alarm or an alert is triggered at the website based on the data which is received at the website.

11. The system of claim 9 wherein the web application interface is a computer web browser or a mobile phone.

12. The system of claim 1 wherein statistics and reports are automatically generated by the website using the collected data.

13. The system of claim 1 wherein the plurality of monitored devices are organized in groups.

14. A method to remotely monitor and control vivarium devices comprising the steps of:
pushing or pulling data from a plurality of monitored devices to a database to form collected data; and
accessing through a web application interface the collected data;
wherein accessed collected data is used to aid in maintaining a consistent environment within a vivarium.

15. The method of claim 14 further comprising the step of:
triggering a centralized alarm or an alert at a website accessing the collected data which is received at the database.

16. The method of claim 14 further comprising the step of:
automatically generating reports at a website accessing the collected data which is received at the database.

17. The method of claim 14 wherein the data is collected in real time.

18. The method of claim 14 wherein a website accesses the data from the database. and the web application interface accesses the data from the website.

19. The method of claim 14 wherein the web application interface is a computer web browser or a mobile phone.

20. The method of claim 14 wherein the monitored devices are connected to a network with a wireless interface and the monitored devices are organized in groups.
